Europäisches Patentamt

European Patent Office

Office européen des brevets

(11) Publication number: **0 070 106**
**A1**

## (12) EUROPEAN PATENT APPLICATION

(21) Application number: **82303204.0**

(22) Date of filing: **21.06.82**

(51) Int. Cl.³: **F 16 D 65/16**
**F 16 D 55/224**

(30) Priority: **14.07.81 GB 8121677**

(43) Date of publication of application:
**19.01.83 Bulletin 83/3**

(84) Designated Contracting States:
**BE DE FR GB IT SE**

(71) Applicant: AUTOMOTIVE PRODUCTS PUBLIC LIMITED
COMPANY
Tachbrook Road
Leamington Spa Warwickshire CV31 3ER(GB)

(72) Inventor: Osborne, Duncan William
7 Mosspaul Close
Leamington Spa Warwickshire(GB)

(74) Representative: Farrow, Robert Michael
Patent Department Automotive Products plc Tachbrook
Road
Leamington Spa Warwickshire CV31 3ER(GB)

(54) Disc brakes.

(57) A disc brake having a force transmitting member (30) slidably mounted in a caliper (16) to thrust a friction pad (12) or (13) against a brake disc (10) on application of the brakes. A lever (28) has one end connected to the force transmitting member (30) and its other end abuts a stationary cam surface (42). An actuator eg. an air cylinder (21) moves the other end of the lever along the cam surface to cause the force transmitting member to apply the pad against the disc.

EP 0 070 106 A1

## "Disc Brakes"

This invention relates to a disc brake which incorporates a mechanical actuating means.

Most existing disc brakes are actuated directly by hydraulic pressure and are, therefore, utilised on vehicles equipped with hydraulic brakes. Furthermore, most disc brakes are utilised on the front brakes of vehicles, and drum brakes are utilised for the rear brakes. This is because it is easier to produce a reliable mechanical parking brake for drum brakes than for a disc brake. The development of a reliable mechanical brake for disc brakes will allow the disc brake to be operated by an air actuator.

Accordingly, there is provided a disc brake having a force transmitting member slidably mounted in a housing and movable to urge a friction pad against a brake disc on application of the brakes, and a lever having one end pivotally connected to the force transmitting member and its other end abutting a stationary cam surface so that actuation of an actuator moves the other end of the lever along the cam surface to move the force transmitting member to apply the pad against the disc.

Preferably the other end of the lever abuts against the cam surface through a roller bearing fitted to said other end.

The invention will be described by way of example and with reference to the accompanying drawings which illustrate an elevation and part section of a disc brake having an air actuated mechanical brake member, and a hydraulically operated piston.

The illustrated disc brake comprises a torque receiving member 11 which is secured to one side of a brake disc 10, and which receives the torque loads from a pair of opposed friction pads 12 and 13 located one on each side of the disc 10. The friction pads 12 and 13 are mounted in a brake caliper 14 which is slidably mounted for axial movement relative to the disc on a pair of guide pins 15 fixed to the torque receiving member 11.

The caliper 14 houses a pair of pistons 16 and 17 located in the caliper on one side of the disc 10 adjacent the torque receiving member 11 to urge the pad 13 against the disc, and a portion of the caliper bridges the disc and holds the pad 12 so that on application of a brake applying means one or both of the pistons 16 or 17 thrust the pad 13 against one side of the disc 10 and pushes the caliper away from the disc to apply the pad 12 against the opposite side of the disc.

The piston 16 is hydraulically operated in the conventional manner and the piston 17 is actuated both hydraulically and through a mechanical means operated by a air actuator 21 carried on the caliper 14. The air actuator 21 has a casing 22 divided in an air chamber 23, and a spring chamber 24 by a diaphragm 25. The diaphragm 25 is supported on a plate 26 which is connected via a rod 27 to a lever 28. The spring chamber 24 houses an actuator spring 29 which biases the diaphragm towards the air chamber 23.

The lever 28 is pivotted to the rod 27 and has one end pivotally connected via a spherical head to a force transmitting member 30 slidably mounted in a housing 36 which is an extension of the caliper. The force transmitting member 30 is co-axial with the piston 17 and has a co-axial stem 32 which extends into the piston 17 and which has an adjuster 31 thereon that provides for adjustment of the overall length of the force transmitting member 30 to limit retraction of the piston 17 when the brakes are relieved.

The co-axial stem 32 has a loose screw threaded engagement with a nut 34 mounted thereon. The nut 34 is located inside the piston 17 and is urged by a spring 35 to rotate and move along the stem 32 until a conical face thereon contacts a like conical face on the inside of the piston 17. If during the hydraulic application of the piston 17 the axial movement of the piston 17 is greater than an axial lost motion connection in the screw threaded engagement between the nut 34 and stem 32 the conical faces separate and the nut is urged along the stem by the spring 35 to keep the faces in contact. When the hydraulic operation of piston 17 ceases, the return load on the piston 17 causes a friction load in the screw thread between the nut 34 and stem 32 so that the nut remains in its new position. Thus the force transmitting member 30 is maintained at a substantially constant length for the operation of the air brake. For a more detailed explanation of the workings of the adjuster the reader is directed to our British Patent No. 1 240 222. The end of the force transmitting means 30 adjacent the lever 28 has a radial flange 37 with radial teeth 38 thereon. An aperture 39 in the housing 36 allows a tool to be inserted into the housing to engage the teeth 38 for rotation of the force transmitting means 30, to allow the mechanical brake to be wound off if the air pressure in chamber 23 fails.

The other end of the lever 28 has a roller bearing 41 thereon that abuts a cam surface 42 fixed into the wall of the housing 36. The cam surface 42 is shaped so that movement of the roller 42 towards the air actuator housing 22 urges the piston 17 towards the brake disc 10. The cam surface is shaped so that the actuator piston 26 moves about 8-12 times the distance to that moved by the piston 17. The cam surface can be formed on a removable block which is inserted into the wall of the housing 36 so that different cam surfaces can be easily utilised for different brake applications.

The air actuated disc brake operates as follows:-

A positive air pressure in the air chamber 23 of the actuator, holds the piston 26 to compress the spring 29 and causes the roller 42 to be located on a portion of the cam surface 42 whereon the piston 17 is not held against the disc 10. When the air pressure in the chamber 23 is released the spring 29 moves the piston 26 towards the air chamber 33 and via the rod 27 moves the lever 28 so that the roller 41 is moved along the cam surface 42 so as to cause the force transmitting means 30 to move axially towards the disc 10 and hence urge the piston 17 to apply the pad 13 directly against the disc 10, and the pad 12 indirectly against the disc.

Abutments 43 are located inside the casing 22 and provide a stop for movement of the piston 26 under the load of the spring to allow the top portion of the casing to be removed for repair of the diaphragm 25.

In the event of a failure of air pressure on the vehicle the piston 17 can be drawn back from its brake applying position by rotation of the transmitting means which causes the nut 34 to move along the stem 32 to shorten the overall length of the force transmitting means.

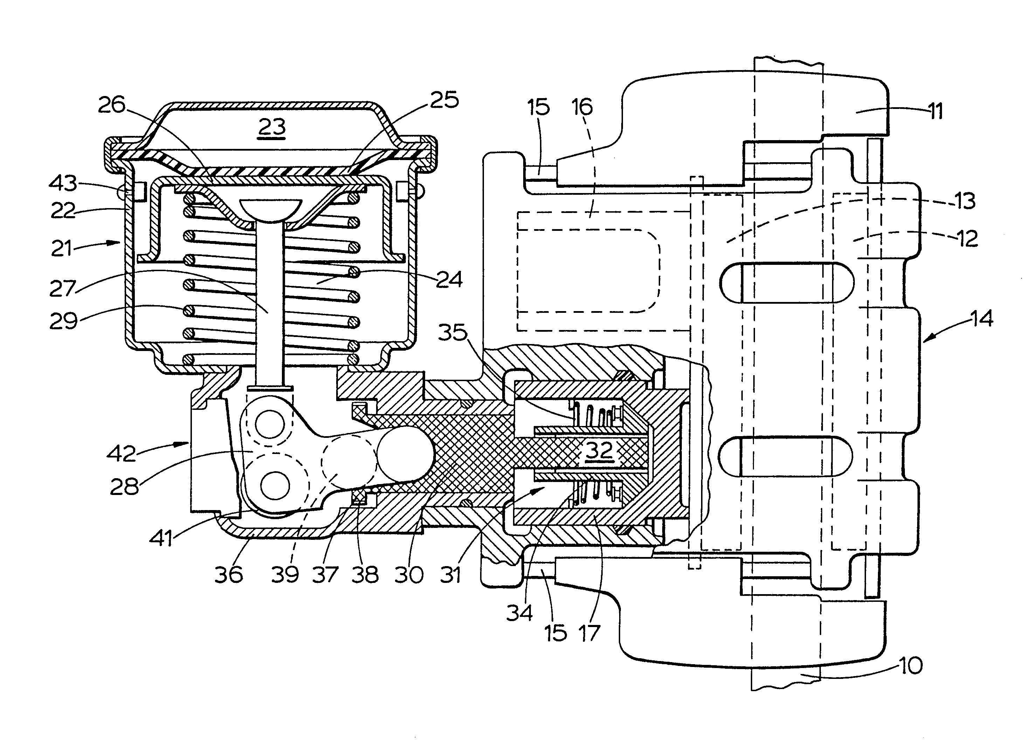

## Claims

1. A disc brake having a force transmitting member (30) slidably mounted in a housing (36) and movable to urge a friction pad (12) or (13) against a brake disc (10) on application of the brakes, and a lever (28) having one end pivotally connected to the force transmitting member (30) and its other end connected to an actuator (21) characterised in that said other end abuts a stationary cam surface (42) so that operation of the actuator (21) moves said other end of the lever (28) along the stationary cam surface (42) to move the force transmitting member (30) to apply the pad against the disc (10).

2. A disc brake as claimed in Claim 1, characterised in that said other end of the lever (28) abuts against the cam surface (42) through a roller bearing (41) fitted to said other end.

3. A disc brake as claimed in Claim 1 or Claim 2, characterised in that the cam surface (42) if formed on a block which fits into the wall of the housing (36) and which is removable enabling different form cam surfaces can be easily utilised.

4.        A disc brake as claimed in any of Claims 1 to 3, characterised in that the actuator (21) is an air cylinder which has a pull rod (27) pivotally connected to said other end portion of the lever (28), the longitudinal axis of the actuator (21) being substantially perpendicular to the direction of movement of the force transmitting member (30).

5.        A disc brake as claimed in any preceding claim, characterised in that the force transmitting member (30) has an automatic adjuster (31) thereon for adjustment of its length.

6.        A disc brake as claimed in Claim 5, characterised in that the force transmitting member has a flange (37) with teeth (38) thereon engagable by a tool insertable through an aperture (39) in the housing (36) so that the force transmitting member (30) can be caused to rotate to operate the adjuster (31) and shorten the overall length of the force transmitting member (30).

1/1

0070106

European Patent Office

**EUROPEAN SEARCH REPORT**

Application number

EP 82 30 3204

## DOCUMENTS CONSIDERED TO BE RELEVANT

| Category | Citation of document with indication where appropriate, of relevant passages | Relevant to claim | CLASSIFICATION OF THE APPLICATION (Int Cl $^3$) |
|---|---|---|---|
| X | DE-A-2 730 959 (KNORR) <br> * Page 9, line 4 – page 10, line 3; figure 1 * | 1,2,4 | F 16 D 65/16 <br> F 16 D 55/224 |
| A | US-A-3 966 028 (ANDERSON) <br> * Whole document * | 1-6 | |
| A | US-A-4 064 973 (DEEM) <br> * Column 2, lines 46-56; column 3, lines 49-62; figures 1-3 * | 1-6 | |
| A | FR-A-2 197 756 (KLÖCKNER) <br> * Whole document * & GB - A - 1 425 351 | 1,3,4 | |
| A | US-A-1 998 533 (BRISSON) | | |
| A | US-A-1 980 611 (BRISSON) | | |
| A | GB-A- 367 653 (TEVES) | | |

TECHNICAL FIELDS SEARCHED (Int. Cl $^3$)

F 16 D

The present search report has been drawn up for all claims

| Place of search | Date of completion of the search | Examiner |
|---|---|---|
| THE HAGUE | 15-10-1982 | KIESLINGER J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82